# EUROPEAN PATENT SPECIFICATION

(11) **EP 3 534 046 B1**
(45) Date of publication and mention of the grant of the patent: **24.02.2021**
(21) Application number: 18159197.5
(22) Date of filing: 28.02.2018
(51) Int. Cl.: F16K 1/52, F24D 19/10, G05D 7/01

(54) **VALVE INSERT FOR A COMPACT RADIATOR AND ASSEMBLY COMPRISING A COMPACT RADIATOR AND A VALVE INSERT**
VENTILEINSATZ FÜR EINEN KOMPAKTHEIZKÖRPER UND ANORDNUNG MIT EINEM KOMPAKTHEIZKÖRPER UND EINEM VENTILEINSATZ
INSERT DE SOUPAPE POUR UN RADIATEUR COMPACT ET ENSEMBLE COMPRENANT UN RADIATEUR COMPACT ET UN INSERT DE SOUPAPE

(43) Date of publication of application: 04.09.2019
(73) Proprietor: Honeywell Technologies Sarl, 1180 Rolle (CH)
(72) Inventor: Svejnoha, Petr, 68201 Vyskov (CZ); Prajzner, Vaclav, 63800 Brno, Kraj Jihomoravsky (CZ)
(74) Representative: Sturm, Christoph

(56) References cited:
- EP-A1- 3 179 173
- EP-A1- 3 223 105
- AT-B- 413 435
- DE-A1-102013 107 762
- DE-A1-102014 004 907
- DE-A1-102014 004 910
- DE-U1- 29 924 249
- US-A1- 2011 068 284

## Description

The present invention relates to a valve insert for a compact radiator and to an assembly comprising a compact radiator and such a valve insert.

Radiators of a hydronic heating system are connected to a supply pipe and to a return pipe of the hydronic heating system. Water heated by a boiler flows through panels of the radiators. The radiator panels radiate heat to the ambient.

From prior art two types of radiators are known, some so-called standard radiators and so-called compact radiators. In standard radiators, a thermostatic radiator valve (TRV) housing is positioned outside the radiator, namely outside a space spanned by the radiator panels. In compact radiators the thermostatic radiator valve (TRV) housing is positioned inside the radiator, namely inside the space spanned by the radiator panels.

A thermostatic radiator valve (TRV) housing accommodates a valve insert. A thermostatic radiator valve (TRV) head is connected to the valve insert. A valve insert shall provide at least three functions: A pre-setting function to pre-set a maximum flow rate through the valve insert. A nominal flow rate control function to set a nominal flow through the valve insert. A pressure regulation function to keep the flow rate through the valve insert constant or almost constant at the nominal flow rate independent from a pressure variation across the valve insert.

Valve inserts for standard radiators providing the above three functions in a reliable way are well known. However, due to the fact that the thermostatic radiator valve (TRV) housing of a compact radiator is positioned inside the radiator or inside the space spanned by the radiator panels, the valve insert for a compact radiator must have smaller dimensions than valve insert for a standard radiator.

This makes it difficult to provide valve inserts for compact radiators providing the above three functions in a reliable way.

US 2011/0068284 A1 and DE 10 2014 004 907 A1 both disclose a valve insert for a compact radiator according to the preamble of claim 1.

Against this background, a novel valve insert for a compact radiator providing the above three functions in a reliable way is provided.

The novel valve insert for a compact radiator has a valve insert housing, wherein the valve insert housing of the valve insert comprises a first housing section, a second housing section attached to the first housing section and a third housing section attached to the second housing section, all housing sections being axially aligned.

The first housing section of the valve insert housing provides an inlet for a fluid, an outlet for the fluid, and a valve insert seat.

The novel valve insert for a compact radiator has further a valve insert stem carrying a valve insert plunger.

The valve insert plunger acts together with the valve insert seat provided by the first valve housing section of the valve insert housing in such a way that the relative position between the valve insert plunger and the valve insert seat defines a nominal flow rate through the valve insert from the inlet towards the outlet.

The novel valve insert for a compact radiator has further a maximum flow pre-setting unit to pre-set a maximum flow through the valve insert.

The maximum flow pre-setting unit has a rotatable pre-setting dial and a pre-setting plunger being linear displaceable when the pre-setting dial becomes rotated. The valve insert stem extends through the pre-setting dial and through the pre-setting plunger of the maximum flow pre-setting unit. The valve insert plunger is partially accommodated within the pre-setting plunger and is linear displaceable relative to the pre-setting plunger by actuating the valve insert stem.

The novel valve insert for a compact radiator has further a pressure difference control unit to keep the flow rate through the valve insert constant or almost constant at the nominal flow rate. The pressure difference control unit comprises a control diaphragm having an inner folded section providing an inner convolution and an outer folded section providing an outer convolution. The outer folded section is attached to the second housing section and to the third housing section and provides the pressure difference control. The inner folded section is attached to the pre-setting plunger and allows a movement of the pre-setting plunger relative to the outer folded section.

Such a valve insert can also be called pressure independent control valve (PICV) insert for compact radiators. The same has a compact design and provides the desired functions in a reliable way.

Preferably, the the second housing section of the valve insert housing comprises a first subsection being attached to the first housing section and a second subsection being attached to the third housing section. The second subsection of the second housing section has a larger outer diameter than the first subsection of the second housing section. The first subsection of the second housing section accommodates the inner folded section of the control diaphragm that provides the inner convolution of the control diaphragm. The second subsection of the second housing section accommodates the outer folded section of the control diaphragm that provides the outer convolution of the control diaphragm.

Such a valve insert has a compact design and provides the desired functions in a reliable way.

Preferably, a pressure depending from the pressure at the inlet is provided to a first side of the outer folded section of the control diaphragm through an opening with the valve insert plunger, through a gap between the valve insert plunger and the valve insert stem, and through a gap between the valve insert stem and the pre-setting plunger. A pressure depending from the pressure at the outlet is provided to a second side of the outer folded section of the control diaphragm through a gap between the pre-setting plunger and the valve housing. Such a valve insert has a compact design and provides the desired functions in a reliable way.

The assembly comprising a compact radiator and a valve insert is defined in claim 11.

Preferred developments of the invention are provided by the dependent claims and the description which follows. Exemplary embodiments are explained in more detail on the basis of the drawing, in which:
- Figure 1: shows a first cross section through a valve insert of a compact radiator according to the present invention;
- Figure 2: shows a second cross section through a valve insert of a compact radiator according to the present invention;
- Figure 3: shows an assembly comprising a compact radiator, a valve insert and a valve head.

The present invention relates to valve insert for a compact radiator and to an assembly comprising a compact radiator and such a valve insert. The valve insert of the present invention can also be called pressure independent control valve (PICV) insert for compact radiators.

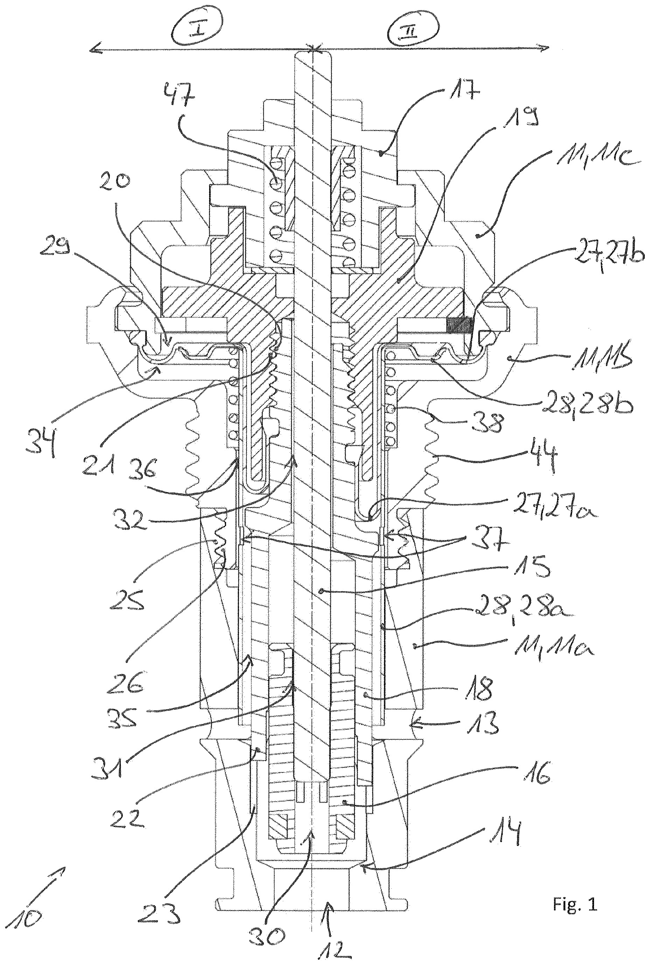

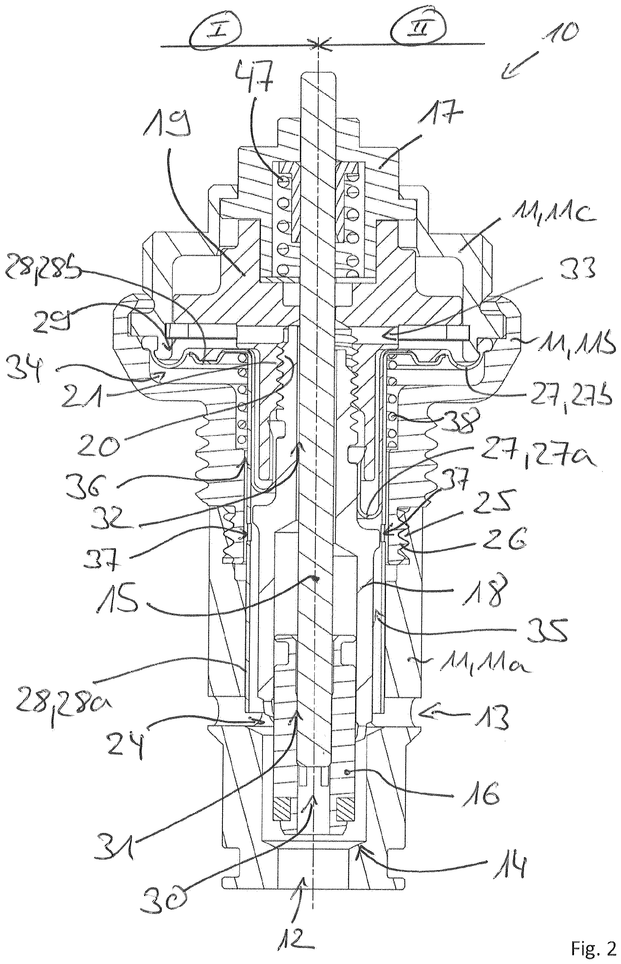

Figures 1 and 2 show cross sections through a valve insert 10 of a compact radiator according to the present invention.

The valve insert 10 for a compact radiator has a valve insert housing 11.

The valve insert housing 11 comprises a first housing section 11a, a second housing section 11b attached to the first housing section 11a and a third housing section 11c attached to the second housing section 11b. All housing sections 11a, 11b, 11c are axially aligned. Longitudinal axes of these housing sections 11a, 11b, 11c lie on each other.

The first housing section 11a and the second housing section 11b are screwed together. The first housing section 11a comprises an inner thread 25 and the second housing section 11b comprises an outer thread 26 screwed into the inner thread 15 of the first housing section 11a.

The second housing section 11b and the third housing section 11c may be pressed or crimped together. Alternatively, the second housing section 11b and the third housing section 11c may be screwed together.

The first housing section 11a of the valve insert housing 11 provides an inlet 12 for a fluid, an outlet for the fluid 13, and a valve insert seat 14.

The valve insert 10 further comprises a valve insert stem 15 carrying a valve insert plunger 16.

The valve insert stem 15 extends through the first housing section 11a, through the second housing section 11b and into the third housing section 11c.

The valve insert stem 15 extends in the direction of the longitudinal axes of the housing sections 11a, 11b, 11c. A longitudinal axis of the valve insert stem 15 lies on the longitudinal axes of the housing sections 11a, 11b, 11c.

The valve insert plunger 16 is accommodated in third housing section 11c. A first end of the valve insert stem 15 being positioned with the third housing section 11c carries the valve insert plunger 16. An opposite second end of the valve insert stem 15 protrudes from the first housing section 11a into the exterior of the valve insert 10.

The valve insert plunger 16 acts together with the valve insert seat 14 provided by the first valve housing section 11a of the valve insert housing 11 in such a way that the relative position between the valve insert plunger 16 and the valve insert seat 14 defines a nominal flow rate through the valve insert 10 from the inlet 12 towards the outlet 13.

The valve insert 10 for a compact radiator further comprises a maximum flow pre-setting unit to pre-set a maximum flow through the valve insert 10.

Figures 1 and 2 show different statuses of the maximum flow pre-setting unit, namely on the left hand side a status I in which the maximum flow through the valve insert 10 is pre-set at an upper limit and on the right hand side a status II in which the maximum flow through the valve insert 10 is pre-set at a lower limit.

The maximum flow pre-setting unit has a rotatable pre-setting dial 17 and a pre-setting plunger 18 being linear displaceable when the pre-setting dial 17 becomes rotated. The rotatable pre-setting dial 17 is accommodated in the first housing section 11a of the valve insert housing 11. The pre-setting plunger 18 is accommodated in the second and third housing sections 11b, 11c of the valve insert housing 11.

In the shown preferred embodiment, the maximum flow pre-setting unit further comprises a rotatable connecting piece 19. The rotatable connecting piece 19 is accommodated in the first and second housing sections 11a, 11b of the valve insert housing 11.

The connecting piece 19 is connected to the pre-setting dial 17 and the pre-setting plunger 18. The connecting piece 19 becomes rotated when the pre-setting dial 17 becomes rotated. The rotation of the connecting piece 19 initiated by the rotation of the pre-setting dial 17 causes a linear displacement of the pre-setting plunger 18.

A spring 47 rests against the rotatable connecting piece 19 and the pre-setting dial 17.

As can be seen in Figures 1 and 2, a section of the pre-setting plunger 18 having an outer thread 20 penetrates into an opening of the connection piece 19 having a corresponding inner thread 21. Protrusions 22 (see Figure 1) of the pre-setting plunger 18 penetrate into openings 23 of the first housing section 11a thereby prohibiting a rotation of the pre-setting plunger 18 but forcing a longitudinal displacement of the pre-setting plunger 18 in reaction of a rotation of the pre-setting dial 17. Figure 2 shows a gap 24 between the pre-setting plunger 18 and the first housing section 11a that defines the maximum flow rate through the valve insert 10.

The valve insert stem 15 extends through the pre-setting dial 17, through the connecting piece 19 and through the pre-setting plunger 18 of maximum flow pre-setting unit. The valve insert plunger 16 is partially accommodated within the pre-setting plunger 18 and is linear displaceable relative to the pre-setting plunger 18 by actuating the valve insert stem 15.

The valve insert 10 for a compact radiator further comprises a pressure difference control unit to keep the flow rate through the valve insert 10 constant or almost constant at the nominal flow rate. The nominal flow rate is defined by the relative position between the valve insert plunger 16 and the valve insert seat 14. Pressures with the inlet 12 and/or within the outlet 13 may change.

The pressure regulation unit keeps the flow rate through the valve insert 10 constant or almost constant at the nominal flow rate independent from a pressure variation across the valve insert 10, namely across or upstream of the valve insert plunger 16.

The pressure difference control unit comprises a control diaphragm 27 having a radially inner folded section 27a providing an inner convolution and a radially outer folded section 27b providing an outer convolution of the control diaphragm 27.

The outer folded section 27b is attached to the second housing section 11b and the third housing section 11c in such a way that a radially outer edge section of the outer folded section 27b in clamped between the second housing section 11b and the third housing section 11c. The outer folded section 27b or outer convolution of the control diaphragm 27 provides the pressure difference control.

The inner folded section 27a is attached to the pre-setting plunger 18 in such a way that a radially inner edge section of the inner folded section 27a in clamped in a recess of the pre-setting plunger 18. The inner folded section 27a or inner convolution of the control diaphragm 27 allows a movement of the pre-setting plunger 18 relative to the outer folded section 27b. The two folded section 27a, 27b or the two convolutions of the control diaphragm 27 allow to pre-set the maximum flow rate without increasing hysteresis for the pressure difference control unit. The

The radially inner edge section of the inner folded section 27a of the control diaphragm 27 being attached to the pre-setting plunger 18 and the radially outer edge section of the outer folded section 27b of the control diaphragm 27 being attached to valve insert housing 11 are - seen in direction of the longitudinal axis of the valve insert stem 15 - positioned offset to each other.

The radially inner edge section of the inner folded section 27a of the control diaphragm 27 being attached to the pre-setting plunger 18 is positioned in closer proximity to the valve insert plunger 16 than the outer folded section 27b of the control diaphragm 27 being attached to valve insert housing 11.

In the shown preferred embodiment, the valve insert 10 comprises a holder 28 for the control diaphragm 27. The holder 28 has a tubular-like section 28a and a plate-like section 28b extending radial outwardly from the tubular-like section 28a.

The plate-like section 28b of the holder 28 guides the radially outer folded section 27b or radially outer convolution of the control diaphragm 27. The tubular-like section 28a of the holder 28 guides the radially inner folded section 27a or radially inner convolution of the control diaphragm 27.

The tubular-like section 28a surrounds at least partially the valve insert stem 15, the pre-setting plunger 18, the valve insert plunger 16 and the connecting piece 19. So, the pre-setting plunger 18 of the maximum flow pre-setting unit is at least partially accommodated within the tubular-like section 28a of the holder 28.

As mentioned above, the pressure regulation unit keeps the flow rate through the valve insert 10 constant or almost constant at the nominal flow rate independent from a pressure variation across or upstream of the valve insert plunger 16.

A pressure depending from the pressure at the inlet 12 of the valve insert 10 is provided to a first side 29 of the outer folded section 27b of the control diaphragm 27 through an opening 30 with the valve insert plunger 16, through a gap 31 between the valve insert plunger 16 and the valve insert stem 15, through a gap 32 between the valve insert stem 15 and the pre-setting plunger 18 and through bores 33 (see Figure 2) within the connection piece 19.

A pressure depending from the pressure at the outlet 13 is provided to a second side 34 of the outer folded section 27b of the control diaphragm 27 through at least one gap between the pre-setting plunger 18 and the valve housing 11, namely through a gap 35 between the pre-setting plunger 18 and tubular-like section 28a of the holder 28 and through a gap 36 between the tubular-like section 28a of the holder 28 and the valve housing 11, wherein said gaps 35, 36 are connected by at least one opening 37 within the tubular-like section 28a of the holder 28.

The pressure depending from the pressure at the inlet 12 of the valve insert 10 acts on the first side 29 of the outer folded section 27b of the control diaphragm 27. The pressure depending from the pressure at the inlet 13 of the valve insert 10 acts on the second side 34 of the outer folded section 27b of the control diaphragm 27.

Further, a spring force provided by a spring 38 acts on the second side 34 of the outer folded section 27b of the control diaphragm 27. Said spring 38 rests against the plate-like section 28b of the holder 28 and against the second housing section 11b of the valve insert housing 11.

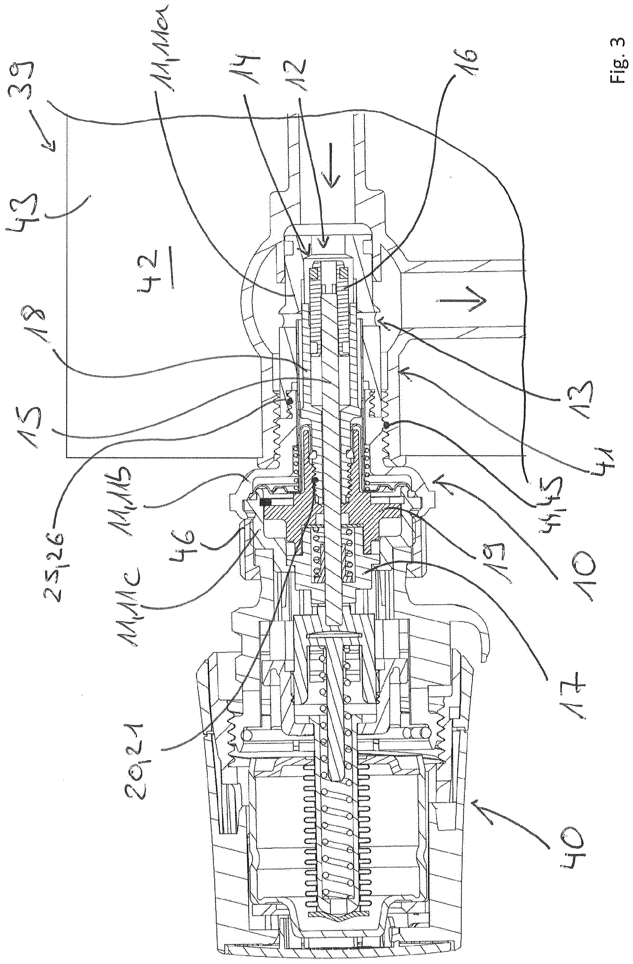

Figure 3 shows an assembly comprising a compact radiator 39, the valve insert 10 and a thermostatic radiator valve head 40.

Such a compact radiator 39 has a thermostatic radiator valve housing 41 positioned inside the compact radiator 29, namely inside a space 42 spanned by radiator panels 43 of the compact radiator 39.

The valve insert 10 is connected to the thermostatic radiator valve housing 41. The second housing section 11b comprises an outer thread 44 through which the valve insert 10 is screwable into an inner thread 45 of the thermostatic radiator valve housing 41 positioned within a compact radiator 39.

The thermostatic radiator valve head 40 connected to the valve insert 10. A nut 46 is used to connect the radiator valve head 40 to the valve insert 10. The thermostatic radiator valve head 40 acts as an actuator for the valve insert stem 15 to set the nominal flow rate.

The spring 47 acts against a force provided by the thermostatic radiator valve head 40.

The second housing section 11b comprises a first subsection being attached to the first housing section 11a and a second subsection being attached to the third housing section 11c. The second subsection of the second housing section 11b has a larger outer diameter than the first subsection of the second housing section 11b. The first subsection of the second housing section 11a accommodates the inner folded section 27a of the control diaphragm 27. The second subsection of the second housing section 11b accommodates the outer folded section 27b of the control diaphragm 27.

In the assembled status (see Figure 4), the first housing section 11a is positioned completely inside the thermostatic radiator valve housing 41. The second housing section 11b is positioned partially inside the thermostatic radiator valve housing 41 and partially outside the thermostatic radiator valve housing 41. The third housing section 11c is positioned completely outside the thermostatic radiator valve housing 41.

The first subsection of the second housing section 11b that accommodates the inner folded section 27a of the control diaphragm 27 is positioned inside the thermostatic radiator valve housing 41 and inside the compact radiator 39. The second subsection of the second housing section 11b that accommodates the outer folded section 27b of the control diaphragm 27 is positioned outside of the thermostatic radiator valve housing 41 and outside the compact radiator 39.

The valve insert 10 has a compact design and provides the desired functions in a reliable way, namely the pre-setting function to pre-set a maximum flow rate through the valve insert 10, a nominal flow rate control function to set a nominal flow through the valve insert 10 and a pressure regulation function to keep the flow rate through the valve insert 10 constant or almost constant at the nominal flow rate independent from a pressure variation across the valve insert 10.

### List of reference signs

- 10: valve insert
- 11: valve insert housing
- 11a: first housing section
- 11b: second housing section
- 11c: third housing section
- 12: inlet
- 13: outlet
- 14: valve insert seat
- 15: valve insert stem
- 16: valve insert plunger
- 17: pre-setting dial
- 18: pre-setting plunger
- 19: connecting piece
- 20: outer thread
- 21: inner thread
- 22: protrusions
- 23: opening
- 24: gap
- 25: inner thread
- 26: outer thread
- 27: control diaphragm
- 27a: inner folded section
- 27b: outer folded section
- 28: holder
- 28a: tubular-like section
- 28b: plate-like section
- 29: first side
- 30: opening
- 31: gap
- 32: gap
- 33: bore
- 34: second side
- 35: gap
- 36: gap
- 37: opening
- 38: spring
- 39: compact radiator
- 40: thermostatic radiator valve head
- 41: thermostatic radiator valve housing
- 42: space
- 43: radiator panel
- 44: outer thread
- 45: inner thread
- 46: nut
- 47: spring

## Claims

1. Valve insert (10) for a compact radiator, having
a valve insert housing (11),
wherein the valve insert housing (11) comprises a first housing section (11a), a second housing section (11b) attached to the first housing section (11a) and a third housing section (11c) attached to the second housing section (11b), all housing sections (11a, 11b, 11c) being axially aligned,
wherein the valve insert housing (11) provides an inlet (12) for a fluid, an outlet (13) for the fluid, and a valve insert seat (14),
a valve insert stem (15) carrying a valve insert plunger (16),
wherein the valve insert plunger (16) acts together with the valve insert seat (14) provided by the valve insert housing (11) in such a way that the relative position between the valve insert plunger (16) and the valve insert seat (14) defines a nominal flow rate through the valve insert (11) from the inlet (12) towards the outlet (13),
a maximum flow pre-setting unit for pre-setting a maximum flow through the valve insert (10),
a pressure difference control unit to keep the flow rate through the valve insert (10) constant or almost constant at the nominal flow rate, wherein
the inlet (12) for a fluid, the outlet (13) for the fluid, and the valve insert seat (14) are provided by the first housing section (11a),
the maximum flow pre-setting unit has a rotatable pre-setting dial (17) and a pre-setting plunger (18) being linear displaceable when the pre-setting dial (17) becomes rotated,
the valve insert stem (15) extends through the pre-setting dial (17) and the pre-setting plunger (18) of the maximum flow pre-setting unit,
the valve insert plunger (16) is partially accommodated within the pre-setting plunger (18) and is linear displaceable relative to the pre-setting plunger (18) by actuating the valve insert stem (15),
**characterized in that**
the pressure difference control unit comprises a control diaphragm (27) having an inner folded section (27a) and an outer folded section (27b),
the outer folded section (27b) is attached to the second housing section (11b) and the third housing section (11c) and provides the pressure difference control,
the inner folded section (27a) is attached to the pre-setting plunger (18) and allows a movement of the pre-setting plunger (18) relative to the outer folded section (27b).

2. Valve insert as claimed in claim 1, **characterized in that**
the first housing section (11a) comprises an inner thread (25) and the second housing section (11b) comprises an outer thread (26) screwed into the inner thread (25) of the first housing section (11a).

3. Valve insert as claimed in claim 1 or 2, **characterized in that**
the second housing section (11b) comprises an outer thread (44) through which the valve insert (10) is screwable into a thermostatic radiator valve housing (41) positioned within a compact radiator (39).

4. Valve insert as claimed in one of claims 1 to 3, **characterized in that**
the second housing section (11b) comprises a first subsection being attached to the first housing section (11a) and a second subsection being attached to the third housing section (11c),
the second subsection of the second housing section (11b) has a larger outer diameter than the first subsection of the second housing section (11b),
the first subsection of the second housing section (11b) accommodates the inner folded section (27a) of the control diaphragm (27),
the second subsection of the second housing section (11b) accommodates the outer folded section (27b) of the control diaphragm (27).

5. Valve insert as claimed in one of claims 1 to 4, **characterized in that**
the maximum flow pre-setting unit comprises a rotatable connecting piece (19),
the connecting piece (19) is connected to the pre-setting dial (17) and the pre-setting plunger (18),
the connecting piece (19) becomes rotated when the pre-setting dial (17) becomes rotated,
the rotation of the connecting piece (19) causes a linear displacement of the pre-setting plunger (18).

6. Valve insert as claimed in one of claims 1 to 5, **characterized in that**
a pressure depending from the pressure at the inlet (12) is provided to a first side (29) of the outer folded section (27b) of the control diaphragm (27) through an opening (30) with the valve insert plunger (16), through a gap (31) between the valve insert plunger (16) and the valve insert stem (15), and through a gap (32) between the valve insert stem (15) and the pre-setting plunger (18).

7. Valve insert as claimed in one of claims 1 to 6, **characterized in that**
a pressure depending from the pressure at the outlet (13) is provided to a second side (34) of the outer folded section (27b) of the control diaphragm (27) through at least one gap between the pre-setting plunger (18) and the valve housing (11).

8. Valve insert as claimed in one of claims 1 to 7, **characterized by**
a holder (28) for the control diaphragm (27) having a tubular-like section (28a) and a plate-like section (28b) extending radial outwardly from the tubular-like section (27a),
wherein the plate-like section (28b) guides the outer folded section (27b) of the control diaphragm (27);
wherein the tubular-like section (28a) guides the inner folded section (27a) of the control diaphragm (27).

9. Valve insert as claimed in claim 8, **characterized in that**
the pre-setting plunger (18) of the maximum flow pre-setting unit is partially accommodated within the tubular-like section (28a) of the holder (28).

10. Valve insert as claimed claim 7 and 9, **characterized in that**
the pressure depending from the pressure at the outlet (13) is provided to the second side (34) of the outer folded section (27b) of the control diaphragm (27) through a gap (35) between the pre-setting plunger (18) and tubular-like section (28a) of the holder (28) and through a gap (36) between the tubular-like section (28a) of the holder (28) and the valve housing (11), wherein said gaps (35, 36) are connected by at least one opening (37) within the tubular-like section (28a) of the holder (28).

11. Assembly comprising
a compact radiator (39) having a thermostatic radiator valve housing (41),
a valve insert (11) as claimed in of claims 1 to 10 connected to the thermostatic radiator valve housing (41),
a thermostatic radiator valve head (40) connected to the valve insert
(11).

12. Assembly as claimed in claim 11, **characterized in that**
the first housing section (11a) is positioned completely inside the thermostatic radiator valve housing (41),
the second housing section (11b) is positioned partially inside the thermostatic radiator valve housing (41) and partially outside the thermostatic radiator valve housing (41),
the third housing section (11c) is positioned completely outside the thermostatic radiator valve housing (41).

13. Assembly as claimed in claim 12, **characterized in that**
the first subsection of the second housing section (11b) is positioned inside the thermostatic radiator valve housing (41),
the second subsection of the second housing section (11b) is positioned outside of the thermostatic radiator valve housing (41).

14. Assembly as claimed in one of claims 11-13, **characterized in that**
the thermostatic radiator valve head (40) is connected to the third housing section (11c) of the valve insert (10).

## Patentansprüche

1. Ventileinsatz (10) für einen Kompaktheizkörper, der Folgendes aufweist:
ein Ventileinsatzgehäuse (11),
wobei das Ventileinsatzgehäuse (11) einen ersten Gehäusebereich (11a), einen zweiten Gehäusebereich (11b), der an dem ersten Gehäusebereich (11a) angebracht ist, und einen dritten Gehäusebereich (11c), der an dem zweiten Gehäusebereich (11b) angebracht ist, umfasst, wobei alle Gehäusebereiche (11a, 11b, 11c) axial ausgerichtet sind,
wobei das Ventileinsatzgehäuse (11) einen Einlass (12) für ein Fluid, einen Auslass (13) für das Fluid und einen Ventileinsatzsitz (14) bereitstellt,
einen Ventileinsatzschaft (15), der einen Ventileinsatzkolben (16) trägt,
wobei der Ventileinsatzkolben (16) zusammen mit dem Ventileinsatzsitz (14), der von dem Ventileinsatzgehäuse (11) bereitgestellt wird, derart zusammenwirkt, dass die Relativposition zwischen dem Ventileinsatzkolben (16) und dem Ventileinsatzsitz (14) eine Nenndurchsatzrate durch den Ventileinsatz (11) von dem Einlass (12) zu dem Auslass (13) definiert,
eine Höchstströmungsvoreinstelleinheit zum Voreinstellen einer Höchstströmung durch den Ventileinsatz (10),
eine Druckdifferenzsteuereinheit zum Halten der Durchsatzrate durch den Ventileinsatz (10) konstant oder nahezu konstant bei der Nenndurchsatzrate, wobei
der Einlass (12) für ein Fluid, der Auslass (13) für das Fluid und der Ventileinsatzsitz (14) von dem ersten Gehäusebereich (11a) bereitgestellt werden,
die Höchstströmungsvoreinstelleinheit eine drehbare Voreinstellwählvorrichtung (17) und einen Voreinstellkolben (18), der linear verlagerbar ist, wenn die Voreinstellwählvorrichtung (17) gedreht wird, aufweist,
sich der Ventileinsatzschaft (15) durch die Voreinstellwählvorrichtung (17) und den Voreinstellkolben (18) der Höchstströmungsvoreinstelleinheit hindurch erstreckt,
der Ventileinsatzkolben (16) zum Teil in dem Voreinstellkolben (18) aufgenommen ist und bezüglich des Voreinstellkolbens (18) durch Betätigen des Ventileinsatzschafts (15) linear verlagerbar ist,
**dadurch gekennzeichnet, dass**
die Druckdifferenzsteuereinheit eine Steuermembran (27) mit einem gefalteten Innenbereich (27a) und einem gefalteten Außenbereich (27b) umfasst,
der gefaltete Außenbereich (27b) an dem zweiten Gehäusebereich (11b) und dem dritten Gehäusebereich (11c) angebracht ist und die Druckdifferenzsteuerung bereitstellt,
der gefaltete Innenbereich (27a) an dem Voreinstellkolben (18) angebracht ist und eine Bewegung des Voreinstellkolbens (18) bezüglich des gefalteten Außenbereichs (27b) gestattet.

2. Ventileinsatz nach Anspruch 1, **dadurch gekennzeichnet, dass**
der erste Gehäusebereich (11a) ein Innengewinde (25) umfasst und der zweite Gehäusebereich (11b) ein Außengewinde (26), das in das Innengewinde (25) des ersten Gehäusebereichs (11a) geschraubt ist, umfasst.

3. Ventileinsatz nach Anspruch 1 oder 2, **dadurch gekennzeichnet, dass**
der zweite Gehäusebereich (11b) ein Außengewinde (44) umfasst, durch das der Ventileinsatz (10) in ein Thermostatheizkörperventilgehäuse (41), das in einem Kompaktheizkörper (39) positioniert ist, schraubbar ist.

4. Ventileinsatz nach einem der Ansprüche 1-3, **dadurch gekennzeichnet, dass**
der zweite Gehäusebereich (11b) einen ersten Unterbereich, der an dem ersten Gehäusebereich (11a) angebracht ist, und einen zweiten Unterbereich, der an dem dritten Gehäusebereich (11c) angebracht ist, umfasst,
der zweite Unterbereich des zweiten Gehäusebereichs (11b) einen größeren Außendurchmesser als der erste Unterbereich des zweiten Gehäusebereichs (11b) aufweist,
der erste Unterbereich des zweiten Gehäusebereichs (11b) den gefalteten Innenbereich (27a) der Steuermembran (27) aufnimmt,
der zweite Unterbereich des zweiten Gehäusebereichs (11b) den gefalteten Außenbereich (27b) der Steuermembran (27) aufnimmt.

5. Ventileinsatz nach einem der Ansprüche 1-4, **dadurch gekennzeichnet, dass**
die Höchstströmungsvoreinstelleinheit ein drehbares Verbindungsstück (19) umfasst,
das Verbindungsstück (19) mit der Voreinstellwählvorrichtung (17) und dem Voreinstellkolben (18) verbunden ist,
das Verbindungsstück (19) gedreht wird, wenn die Voreinstellwählvorrichtung (17) gedreht wird,
die Drehung des Verbindungsstücks (19) eine lineare Verlagerung des Voreinstellkolbens (18) bewirkt.

6. Ventileinsatz nach einem der Ansprüche 1-5, **dadurch gekennzeichnet, dass**
ein Druck in Abhängigkeit von dem Druck an dem Einlass (12) einer ersten Seite (29) des gefalteten Außenbereichs (27b) der Steuermembran (27) durch eine Öffnung (30) mit dem Ventileinsatzkolben (16), durch einen Spalt (31) zwischen dem Ventileinsatzkolben (16) und dem Ventileinsatzschaft (15) und durch einen Spalt (32) zwischen dem Ventileinsatzschaft (15) und dem Voreinstellkolben (18) zugeführt wird.

7. Ventileinsatz nach einem der Ansprüche 1-6, **dadurch gekennzeichnet, dass**
ein Druck in Abhängigkeit von dem Druck an dem Auslass (13) einer zweiten Seite (34) des gefalteten Außenbereichs (27b) der Steuermembran (27) durch mindestens einen Spalt zwischen dem Voreinstellkolben (18) und dem Ventilgehäuse (11) zugeführt wird.

8. Ventileinsatz nach einem der Ansprüche 1-7, **gekennzeichnet durch**
eine Haltevorrichtung (28) für die Steuermembran (27) mit einem rohrförmigen Bereich (28a) und einem plattenförmigen Bereich (28b), der sich von dem rohrförmigen Bereich (27a) radial nach außen erstreckt,
wobei der plattenförmige Bereich (28b) den gefalteten Außenbereichs (27b) der Steuermembran (27) führt;
wobei der rohrförmige Bereich (28a) den gefalteten Innenbereich (27a) der Steuermembran (27) führt.

9. Ventileinsatz nach Anspruch 8, **dadurch gekennzeichnet, dass**
der Voreinstellkolben (18) der Höchstströmungsvoreinstelleinheit zum Teil in dem rohrförmigen Bereich (28a) der Haltevorrichtung (28) aufgenommen ist.

10. Ventileinsatz nach Anspruch 7 und 9, **dadurch gekennzeichnet, dass**
der Druck in Abhängigkeit von dem Druck an dem Auslass (13) der zweiten Seite (34) des gefalteten Außenbereichs (27b) der Steuermembran (27) durch einen Spalt (35) zwischen dem Voreinstellkolben (18) und dem rohrförmigen Bereich (28a) der Haltevorrichtung (28) und durch einen Spalt (36) zwischen dem rohrförmigen Bereich (28a) der Haltevorrichtung (28) und dem Ventilgehäuse (11) zugeführt wird, wobei die Spalte (35, 36) durch mindestens eine Öffnung (37) in dem rohrförmigen Bereich (28a) der Haltevorrichtung (28) verbunden sind.

11. Anordnung, die Folgendes umfasst:
einen Kompaktheizkörper (39) mit einem Thermostatheizkörperventilgehäuse (41),
einen Ventileinsatz (11) nach einem der Ansprüche 1-10, der mit dem Thermostatheizkörperventilgehäuse (41) verbunden ist,
einen Thermostatheizkörperventilkopf (40), der mit dem Ventileinsatz (11) verbunden ist.

12. Anordnung nach Anspruch 11, **dadurch gekennzeichnet, dass**
der erste Gehäusebereich (11a) komplett in dem Thermostatheizkörperventilgehäuse (41) positioniert ist,
der zweite Gehäusebereich (11b) zum Teil in dem Thermostatheizkörperventilgehäuse (41) und zum Teil außerhalb des Thermostatheizkörperventilgehäuses (41) positioniert ist,
der dritte Gehäusebereich (11c) komplett außerhalb des Thermostatheizkörperventilgehäuses (41) positioniert ist.

13. Anordnung nach Anspruch 12, **dadurch gekennzeichnet, dass**
der erste Unterbereich des zweiten Gehäusebereichs (11b) in dem Thermostatheizkörperventilgehäuse (41) positioniert ist,
der zweite Unterbereich des zweiten Gehäusebereichs (11b) außerhalb des Thermostatheizkörperventilgehäuses (41) positioniert ist.

14. Anordnung nach einem der Ansprüche 11-13, **dadurch gekennzeichnet, dass**
der Thermostatheizkörperventilkopf (40) mit dem dritten Gehäusebereich (11c) das Ventileinsatzes (10) verbunden ist.

## Revendications

1. Insert de soupape (10) pour un radiateur compact, ayant
un boîtier d'insert de soupape (11),
le boîtier d'insert de soupape (11) comprenant une première section de boîtier (11a), une deuxième section de boîtier (11b) attachée à la première section de boîtier (11a) et une troisième section de boîtier (11c) attachée à la deuxième section de boîtier (11b), toutes les sections de boîtier (11a, 11b, 11c) étant alignées axialement,
le boîtier d'insert de soupape (11) fournissant une entrée (12) pour un fluide, une sortie (13) pour le fluide, et un siège d'insert de soupape (14), une tige d'insert de soupape (15) portant un plongeur d'insert de soupape (16),
le plongeur d'insert de soupape (16) agissant conjointement avec le siège d'insert de soupape (14) fourni par le boîtier d'insert de soupape (11) de manière à ce que la position relative entre le plongeur d'insert de soupape (16) et le siège d'insert de soupape (14) définisse un débit nominal à travers l'insert de soupape (11) de l'entrée (12) vers la sortie (13),
une unité de préréglage d'écoulement maximum pour prérégler un écoulement maximum à travers l'insert de soupape (10),
une unité de commande de différence de pression pour maintenir constant ou presque constant le débit à travers l'insert de soupape (10), au débit nominal,
l'entrée (12) pour un fluide, la sortie (13) pour le fluide, et le siège d'insert de soupape (14) étant fournis par la première section de boîtier (11a),
l'unité de préréglage d'écoulement maximum présentant un cadran de préréglage rotatif (17) et un plongeur de préréglage (18) pouvant être déplacé linéairement lorsque le cadran de préréglage (17) est tourné,
la tige d'insert de soupape (15) s'étendant à travers le cadran de préréglage (17) et le plongeur de préréglage (18) de l'unité de préréglage d'écoulement maximum,
le plongeur d'insert de soupape (16) étant reçu en partie à l'intérieur du plongeur de préréglage (18) et pouvant être déplacé linéairement par rapport au plongeur de préréglage (18) par actionnement de la tige d'insert de soupape (15),
**caractérisé en ce que**
l'unité de commande de différence de pression comprend un diaphragme de commande (27) ayant une section pliée intérieure (27a) et une section pliée extérieure (27b),
la section pliée extérieure (27b) est attachée à la deuxième section de boîtier (11b) et à la troisième section de boîtier (11c) et fournit la commande de différence de pression,
la section pliée intérieure (27a) est attachée au plongeur de préréglage (18) et permet un mouvement du plongeur de préréglage (18) par rapport à la section pliée extérieure (27b).

2. Insert de soupape selon la revendication 1, **caractérisé en ce que**
la première section de boîtier (11a) comprend un filetage intérieur (25) et la deuxième section de boîtier (11b) comprend un filetage extérieur (26) vissé dans le filetage intérieur (25) de la première section de boîtier (11a).

3. Insert de soupape selon la revendication 1 ou 2, **caractérisé en ce que**
la deuxième section de boîtier (11b) comprend un filetage extérieur (44) à travers lequel l'insert de soupape (10) peut être vissé dans un boîtier de soupape de radiateur thermostatique (41) positionné à l'intérieur d'un radiateur compact (39).

4. Insert de soupape selon l'une des revendications 1 à 3, **caractérisé en ce que**
la deuxième section de boîtier (11b) comprend une première sous-section attachée à la première section de boîtier (11a) et une deuxième sous-section attachée à la troisième section de boîtier (11c),
la deuxième sous-section de la deuxième section de boîtier (11b) a un plus grand diamètre extérieur que la première sous-section de la deuxième section de boîtier (11b),
la première sous-section de la deuxième section de boîtier (11b) reçoit la section pliée intérieure (27a) du diaphragme de commande (27),
la deuxième sous-section de la deuxième section de boîtier (11b) reçoit la section pliée extérieure (27b) du diaphragme de commande (27).

5. Insert de soupape selon l'une des revendications 1 à 4, **caractérisé en ce que**
l'unité de préréglage d'écoulement maximum comprend une pièce de connexion rotative (19),
la pièce de connexion (19) est connectée au cadran de préréglage (17) et au plongeur de préréglage (18),
la pièce de connexion (19) est tournée lorsque le cadran de préréglage (17) est tourné,
la rotation de la pièce de connexion (19) provoque un déplacement linéaire du plongeur de préréglage (18).

6. Insert de soupape selon l'une des revendications 1 à 5, **caractérisé en ce**
**qu'**une pression dépendant de la pression au niveau de l'entrée (12) est appliquée sur un premier côté (29) de la section pliée extérieure (27b) du diaphragme de commande (27) via une ouverture (30) formée avec le plongeur d'insert de soupape (16), via un espace (31) entre le plongeur d'insert de soupape (16) et la tige d'insert de soupape (15), et via un espace (32) entre la tige d'insert de soupape (15) et le plongeur de préréglage (18).

7. Insert de soupape selon l'une des revendications 1 à 6, **caractérisé en ce**
**qu'**une pression dépendant de la pression au niveau de la sortie (13) est appliquée sur un deuxième côté (34) de la section pliée extérieure (27b) du diaphragme de commande (27) via au moins un espace entre le plongeur de préréglage (18) et le boîtier de soupape (11).

8. Insert de soupape selon l'une des revendications 1 à 7, **caractérisé par**
un dispositif de retenue (28) pour le diaphragme de commande (27) ayant une section de type tubulaire (28a) et une section de type plaque (28b) s'étendant radialement vers l'extérieur depuis la section de type tubulaire (27a),
la section de type plaque (28b) guidant la section pliée extérieure (27b) du diaphragme de commande (27) ;
la section de type tubulaire (28a) guidant la section pliée intérieure (27a) du diaphragme de commande (27).

9. Insert de soupape selon la revendication 8, **caractérisé en ce que**
le plongeur de préréglage (18) de l'unité de préréglage d'écoulement maximum est reçu en partie à l'intérieur de la section de type tubulaire (28a) du dispositif de retenue (28).

10. Insert de soupape selon les revendications 7 et 9, **caractérisé en ce que**
la pression dépendant de la pression au niveau de la sortie (13) est appliquée sur le deuxième côté (34) de la section pliée extérieure (27b) du diaphragme de commande (27) via un espace (35) entre le plongeur de préréglage (18) et la section de type tubulaire (28a) du dispositif de retenue (28) et via un espace (36) entre la section de type tubulaire (28a) du dispositif de retenue (28) et le boîtier de soupape (11), lesdits espaces (35, 36) étant reliés par au moins une ouverture (37) à l'intérieur de la section de type tubulaire (28a) du dispositif de retenue (28).

11. Ensemble comprenant
un radiateur compact (39) ayant un boîtier de soupape de radiateur thermostatique (41),
un insert de soupape (11) selon les revendications 1 à 10, connecté au boîtier de soupape de radiateur thermostatique (41),
une tête de soupape de radiateur thermostatique (40) connectée à l'insert de soupape (11).

12. Ensemble selon la revendication 11, **caractérisé en ce que**
la première section de boîtier (11a) est positionnée complètement à l'intérieur du boîtier de soupape de radiateur thermostatique (41),
la deuxième section de boîtier (11b) est positionnée en partie à l'intérieur du boîtier de soupape de radiateur thermostatique (41) et en partie à l'extérieur du boîtier de soupape de radiateur thermostatique (41),
la troisième section de boîtier (11c) est positionnée complètement à l'extérieur du boîtier de soupape de radiateur thermostatique (41).

13. Ensemble selon la revendication 12, **caractérisé en ce que**
la première sous-section de la deuxième section de boîtier (11b) est positionnée à l'intérieur du boîtier de soupape de radiateur thermostatique (41),
la deuxième sous-section de la deuxième section de boîtier (11b) est positionnée à l'extérieur du boîtier de soupape de radiateur thermostatique (41) .

14. Ensemble selon l'une des revendications 11 à 13, **caractérisé en ce que**
la tête de soupape de radiateur thermostatique (40) est connectée à la troisième section de boîtier (11c) de l'insert de soupape (10).
